Europäisches Patentamt

(19) European Patent Office    (11) Numéro de publication:    **0 210 899**

Office européen des brevets    **B1**

(12)    # FASCICULE DE BREVET EUROPÉEN

(45) Date de publication du fascicule du brevet:
21.06.89

(51) Int. Cl.⁴: **G 21 C 13/02, F 22 B 37/22**

(21) Numéro de dépôt: 86401485.7

(22) Date de dépôt: 03.07.86

(54) Obturateur amovible pour orifice accessible seulement par un passage étroit.

(30) Priorité: 16.07.85 FR 8510899

(43) Date de publication de la demande:
04.02.87 Bulletin 87/6

(45) Mention de la délivrance du brevet:
21.06.89 Bulletin 89/25

(84) Etats contractants désignés:
BE CH DE LI SE

(56) Documents cité:
EP-A-0 014 878
EP-A-0 141 738
NL-C-33 117

(73) Titulaire: FRAMATOME, Tour Fiat 1, Place de la
Coupole, F-92400 Courbevoie (FR)

(72) Inventeur: Lavalerie, Claude, 12 Résidence du Bois
de Boulogne, F-95250 L'Isle Adam (FR)
Inventeur: Cartry, Jean- Pierre, 117 cours
Gambetta, F-69003 Lyon (FR)

(74) Mandataire: Bressand, Georges, c/o CABINET
LAVOIX 2 Place d'Estienne d'Orves, F-75441
Paris Cedex 09 (FR)

EP 0 210 899 B1

LIBER, STOCKHOLM 1989

## Description

La présente invention concerne un obturateur amovible destiné à la fermeture d'un orifice difficilement accessible et est tout particulièrement adapté à l'obturation provisoire de l'orifice de raccordement d'une conduite du circuit primaire d'un réacteur nucléaire à eau sous pression sur la boîte à eau d'un générateur de vapeur.

Un tel générateur est en effet traversé par l'eau sous pression chauffée au contact des éléments combustibles du réacteur nucléaire, qui circule dans un faisceau de tubes en U et transmet sa chaleur à un fluide secondaire qui est ainsi vaporisé à l'intérieur du générateur. Le faisceau de tubes en U est porté par une plaque tubulaire délimitant avec le fond du générateur de vapeur une boîte à eau séparée en deux compartiments, respectivement d'entrée et de sortie de l'eau sous pression, chacun de ces compartiments comportant un orifice de raccordement au circuit primaire du réacteur dont le diamètre doit être important pour permettre des débits élevés.

Or l'importance du risque de corrosion des tubes du faisceau et le danger que présenterait la mise en communication des fluides des circuits primaire et secondaire par des trous créés dans ces tubes par l'effet de cette corrosion obligent à effectuer de manière fréquente des opérations de maintenance et de contrôle de ce faisceau de tubes. Il est donc nécessaire d'une part de pouvoir accéder à chacun des compartiments de la boîte à eau, et d'autre part de pouvoir isoler ces compartiments du circuit primaire du réacteur.

L'accès au compartiment s'effectue par des trous d'homme qui doivent avoir la plus faible dimension possible et par suite en général un diamètre juste suffisant pour le passage normal de l'intervenant. En effet, pendant le fonctionnement normal du réacteur, ces accès doivent être fermés de manière étanche alors que le fluide primaire contenu dans la boîte à eau est sous une pression importante.

L'isolement de la boîte à eau suppose l'obturation de manière étanche de l'orifice de raccordement au circuit primaire du réacteur bien que la circulation de ce fluide soit arrêtée. Or cet orifice à un diamètre nettement supérieur à celui du trou d'homme d'accès dans la boîte à eau qui constitue le seul passage permettant l'introduction de moyens d'obturation et en outre il doit être obturé rapidement pour des raisons de sécurité de l'intervenant.

On connaît par le EP-A-0 141 738, un obturateur constitué par plusieurs éléments articulés entre eux et susceptibles d'être pliés mais ce dispositif permet difficilement de concilier les exigences d'étanchéité à des pressions élevées, de rapidité de mise en place, de faible poids et de facilité d'introduction par un orifice de petites dimensions.

On connaît également par le EP-A-0 014 878, un obturateur comportant au moins deux panneaux bordés sur une partie de leur périphérie par une bride de fixation sur le pourtour de l'orifice à obturer, qui est munie d'un joint d'étanchéité et sur l'autre partie de leur périphérie par une nervure d'assemblage, et des moyens de serrage des nervures accolées des deux panneaux adjacents.

La présente invention à pour but de remédier à ces inconvénients en fournissant un obturateur amovible qui réponde aux exigences ci-dessus.

Cette invention à en effet pour objet un obturateur amovible comportant au moins deux panneaux bordés sur une partie de leur périphérie par une bride de fixation sur le pourtour de l'orifice à obturer qui est munie d'un joint torique d'étanchéité et sur l'autre partie de leur périphérie par une nervure d'assemblage sur un panneau adjacent et des moyens de serrage des nervures accolées des panneaux adjacents, caractérisé en ce que lesdits moyens de serrage sont des pinces, chaque pince étant constituée par un cavalier qui est fixé sur la nervure de l'un des panneaux et dans lequel peut être emboîtée la nervure du panneau adjacent et au moins l'un des panneaux comporte un joint torique d'étanchéité sur sa face latérale d'appui sur un panneau adjacent.

L'obturateur ainsi constitué est facile à introduire par un trou de faible diamètre puisque chacun des panneaux est indépendant. L'assemblage de ces panneaux et le montage de l'ensemble sur l'orifice à obturer s'effectuent par des opérations simples d'emboîtement et de vissage, et assurent en outre immédiatement l'étanchéité périphérique puisque chaque panneau porte son propre joint torique.

Selon une autre caractéristique de l'invention chaque panneau central comporte également un joint torique d'étanchéité sur ses faces latérales.

La description ci-dessous d'un mode de réalisation, donné à titre d'exemple non limitatif et représenté aux dessins annexés, fera d'ailleurs ressortir les caractéristiques et avantages de l'invention. Ce mode de réalisation concerne l'obturation provisoire, à l'intérieur de la boîte à eau d'un générateur de vapeur, de l'orifice de raccordement au circuit primaire d'un réacteur nucléaire mais il est bien évident que l'invention peut également être utilisée dans d'autres domaines.

- La Figure 1 est une vue en plan d'un obturateur selon l'invention, montrant la face de celui-ci qui est destinée à être tournée en direction opposée à celle de l'orifice;
- la Figure 2 est une vue en coupe suivant la ligne II - II de la Figure 1;
- la Figure 3 est une vue de détail, à plus grande échelle, montrant en coupe transversale l'assemblage d'un panneau latéral et d'un panneau central;
- la Figure 4 est une vue en perspective à grande échelle du détail A de la Figure 1 avant le rapprochement du panneau latéral et du panneau central;

- la Figure 5 est une vue de dessus des deux éléments de la Figure 4 après assemblage des deux panneaux, le joint torique ayant toutefois été supprimé;

- la Figure 6 est une vue de côté du panneau central de la Figure 4.

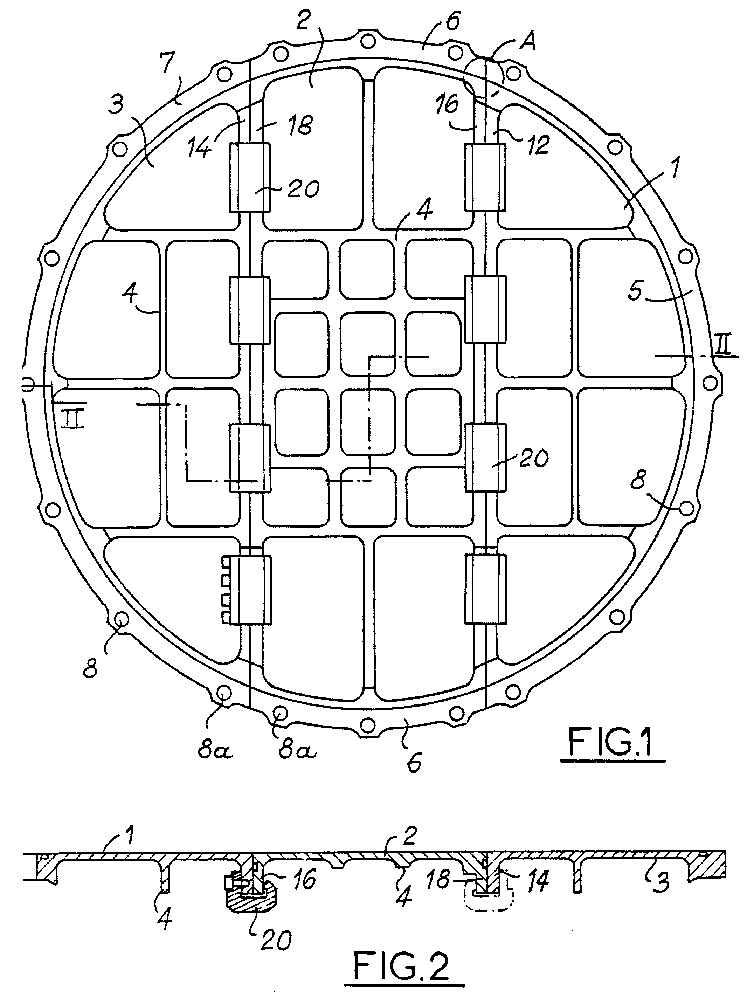

L'obturateur représenté sur les Figures 1 et 2 est constitué par trois panneaux respectivement 1, 2 et 3 qui sont assemblés entre eux pour former un disque ayant le même diamètre que l'orifice à obturer. Chacun des ces panneaux est réalisé en un matériau à faible densité tel qu'un alliage léger d'aluminium et comporte une face munie de nervures 4 qui lui permet d'avoir une résistance importante avec un faible poids. Cette face nervurée est destinée à être placée à l'intérieur de la boîte à eau, tandis que la face opposée qui est plane est tournée vers l'orifice à obturer. Chacun des panneaux 1, 2 et 3 comporte sur la partie de sa périphérie qui est incurvée une bride extérieure respectivement 5, 6, 7 qui est percée d'alésages 8 pour sa fixation par boulons sur la colonne réceptrice entourant l'orifice à obturer. Sur chacune de ces brides les alésages 8 sont régulièrement espacés mais la distance qui sépare les alésages voisins 8a de deux panneaux adjacents est inférieure à cet espacement normal.

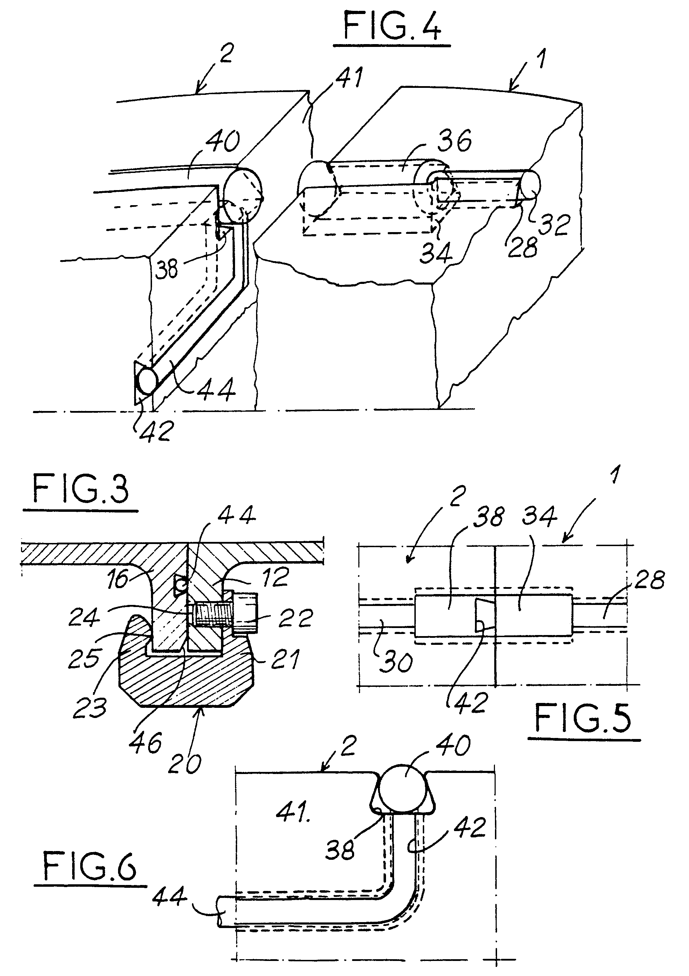

Les panneaux sont également munis sur leur périphérie d'un rebord rectiligne de contact avec le panneau adjacent en saillie dans la même direction que les nervures. Ainsi, chacun des panneaux latéraux 1 et 3 comporte un rebord rectiligne 12, 14, tandis que le panneau central 2 comporte deux rebords rectilignes parallèles 16 et 18 qui sont en appui respectivement contre les rebords 12 et 14, lorsque l'obturateur est assemblé comme représenté sur les Figures 1 et 2. Des cavaliers 20 serrent l'un contre l'autre les deux rebords ainsi accolés. Au moins un cavalier est en effet monté sur chacune des nervures 12 et 14 des panneaux latéraux 1 et 3 et rendu solidaire de ce rebord au moyen de vis 22 qui traversent des alésages d'une aile 21 de ce cavalier et sont vissés dans des trous 24 du rebord correspondant (Figure 3). L'aile 21 est de préférence amincie en direction de son extrémité libre et comporte des évidements de logement des têtes des vis 22. La seconde aile 23 du cavalier 20 est légèrement rabattue vers l'intérieur et forme un bourrelet 25 d'appui et de serrage de la nervure 16 ou 18 du panneau central.

Plusieurs cavaliers sont de préférence montés à intervalles réguliers le long des nervures 12 et 14, leur nombre variant selon la dimension de l'obturateur et la pression à laquelle il doit résister.

Chacun des panneaux 1, 2 et 3 comporte en outre dans sa face plane une gorge périphérique 28, 30, par exemple, de section en queue d'aronde qui reçoit un joint torique d'étanchéité 32. Les gorges des différents panneaux ont des rayons de courbure identiques de sorte que lors de l'assemblage de l'obturateur elles viennent dans le prolongement les unes des autres et constituent un dispositif continu d'étanchéité avec le pourtour de l'orifice.

Pour faciliter cette continuité, la gorge 28 du panneau latéral 1, de même que celle du panneau latéral 3, comporte à chacune de ses extrémités une portion de plus grande dimension 34 (Figures 4 et 5) et le joint torique 32 comporte également une extrémité de plus grand diamètre 36. En outre, la longueur du joint 32, 36 est légèrement supérieure à celle des gorges 28, 30. Chacune des gorges périphériques 30 du panneau central 2 est également terminée à ses deux extrémités par une portion de plus grande dimension 38 et contient, comme les gorges 28, un joint torique dont les extrémités forment des cylindres 40 de plus grand diamètre et dont la longueur est supérieure à celle de la gorge qui le contient. Le serrage des nervures adjacentes 12, 16 et 14, 18 provoque donc une compression des joints toriques 36, 40 l'un contre l'autre et assure ainsi une étanchéité efficace entre les deux panneaux adjacents.

Le panneau central comporte en outre dans la face extérieure ou face d'appui 41 de chacune de ses nervures latérales 16 et 18 une gorge longitudinale 42 ayant de préférence également une section en queue d'aronde et destinée à recevoir un joint torique 44. La gorge 42 est recourbée vers le haut à chacune de ses extrémités pour rejoindre la gorge périphérique 38 comme le montre plus particulièrement les Figures 4 à 6. De préférence, le joint torique 44 et le joint périphérique 40 du panneau central 2 sont moulés en un ensemble unique et continu.

Chacun des panneaux de l'obturateur est ainsi muni à l'avance de son dispositif d'étanchéité tandis que les panneaux latéraux 1 et 3 portent les organes d'assemblage constitués par les cavaliers 20. Ces éléments peuvent être transportés et manipulés indépendamment les uns des autres et par suite être introduits successivement par le trou d'accès dans la boîte à eau du générateur de vapeur. Leurs dimensions sont facilement adaptées à la largeur de ce trou car le nombre des panneaux utilisés peut varier, plusieurs panneaux centraux 2 pouvant être accolés les uns aux autres entre les éléments latéraux 1 et 3 et retenus entre eux par des cavaliers 20 supplémentaires.

A l'intérieur de la boîte à eau du générateur de vapeur, l'opérateur enclenche l'un des rebords latéraux, par exemple le rebord 16, du panneau central 12 sous les cavaliers 20 portés par l'élément latéral 1 en inclinant ces deux panneaux l'un par rapport à l'autre. De préférence, les rebords 16 et 18 du panneau central sont d'ailleurs munis d'un chanfrein extérieur 46 (Figure 3) qui facilite cette introduction. L'épaisseur et la raideur du joint latéral 44 s'opposent par contre à la venue en contact des deux rebords 12 et 16 correspondants de sorte que las deux panneaux restent légèrement inclinés l'un par rapport à l'autre. L'opérateur assemble alors le second panneau latéral 3 en emboîtant ses cavaliers 20 sur le rebord 18 du panneau central 2, puis il place l'obturateur ainsi constitué en regard de l'orifice à obturer. Le joint torique périphérique 36, 40 de la face plane de l'obturateur est appliqué contre la couronne qui entoure cet orifice à obturer, et chacun des alésages 8 de la bride extérieure de l'obturateur mis en alignement avec un alésage taraudé de cette couronne. Il suffit alors de fixer l'obturateur au moyen de boulons dont le serrage assurera à la fois l'écrasement du joint périphérique et la compression des joints latéraux du panneau central entre les deux nervures adjacentes au fur et à mesure de la suppression de l'angle d'inclinaison entre les panneaux voisins.

A chacune des jonctions entre panneaux, l'augmentation du diamètre de l'extrémité du joint torique favorise le contact entre les deux éléments adjacents tandis que le supplément de longueur de ce joint par rapport à celle de la gorge accentue l'effort de compression. La continuité de l'étanchéité obtenue est donc assurée et les risques de fuites en ces points écartés.

Bien entendu, des pions de centrage ou analogues pourraient être prévus sur les panneaux pour faciliter leur emboîtement et leur positionnement relatif. De même la forme des panneaux latéraux et centraux peut facilement être adaptée pour correspondre à celle d'un orifice à obturer, de forme autre que circulaire.

Les cavaliers pourraient également être remplacés par d'autres pinces susceptibles d'être fixées à l'avance sur l'un du panneaux et de recevoir le rebord du panneau adjacent de préférence par emboîtement.

Ces cavaliers ou pinces sont réalisés en une matière ayant une grande résistance mécanique de sorte que l'obturateur est solidement assemble et totalement étanche. Il peut ainsi résister à des pressions élevées telles que, par exemple, celles qui règnent lors des opérations de décontamination du circuit primaire d'un réacteur à eau sous pression.

Le matériau constituant les panneaux et notamment, un alliage léger d'aluminium, peut facilement subir un traitement de surface de façon à lui permettre de résister à l'action chimique des produits avec lesquels il doit être en contact et notamment aux réactifs utilisés lors d'opérations de décontamination du circuit primaire du réacteur nucléaire ou des produits utilisés en pétrochimie.

Bien que l'obturateur qui vient d'être décrit comporte trois panneaux, il est clair que le nombre de panneaux peut varier en fonction notamment des dimensions de l'orifice à obturer et de l'orifice d'accès. L'obturateur peut ne comporter que deux panneaux ou au contraire en comporter plus de trois selon les besoins. En outre, l'obturateur peut comporter un ou plusieurs panneaux munis d'un seul joint torique d'étanchéité d'assemblage 42 sur leur nervure d'assemblage ou sur l'une de leurs nervures.

**Revendications**

1. Obturateur amovible pour orifice accessible seulement par un passage étroit comportant au moins deux panneaux (1, 2, 3) bordés sur une partie de leur périphérie par une bride (5, 6, 7) de fixation sur le pourtour de l'orifice à obturer, qui est munie d'un joint torique d'étanchéité (32, 40) et sur l'autre partie de leur périphérie par une nervure (12, 14, 16, 18) d'assemblage sur un panneau adjacent, et des moyens de serrage des nervures accolées des deux panneaux adjacents, caractérisé en ce que lesdits moyens de serrage sont des pinces, chaque pince étant constituée par un cavalier (20) qui est fixé sur la nervure (12, 14) de l'un des panneaux et dans lequel peut être emboîtée la nervure (16, 18) du panneau adjacent et au moins l'un des panneaux (2) comporte un joint torique d'étanchéité (44) sur sa face latérale d'appui sur un panneau adjacent.

2. Obturateur suivant la revendication 1, caractérisé en ce qu'il comporte un panneau central (2) qui comporte un joint torique d'étanchéité (44) sur ses deux faces latérales opposées d'appui sur les panneaux latéraux.

3. Obturateur suivant la revendication 1, caractérisé en ce que le joint d'étanchéité périphérique (32) de chacun des panneaux est terminé à chacune cle ses extrémités par une portion de plus grand diamètre (36, 40).

4. Obturateur suivant la revendication 1, caractérisé en ce que le joint torique périphérique (32 - 40) de chaque panneau à une longueur supérieure à celle de la gorge (28, 30) dans laquelle il est placé.

5. Obturateur suivant l'une des revendications 2 à 4, caractérisé en ce que les joints périphériques (32 - 40) et latéraux (44) du panneau central sont moulés d'une seule pièce.

6. Obturateur suivant la revendication 5, caractérisé en ce que les joints toriques d'étanchéité sont placés dans des gorges de section en queue d'aronde.

7. Obturateur suivant la revendication 1, caractérisé en ce qu il comporte une face munie de nervures (4) et en ce que les gorges (28, 30) de réception du joint torique d'étanchéité (32 - 40) sont ménagées dans la face des panneaux opposée à ces nervures.

8. Obturateur suivant la revendication 1, caractérisé en ce qu'il est constitué par un premier panneau latéral (1) muni d'un rebord rectiligne (12) sur lequel sont montés des cavaliers de serrage (20) en saillie à l'extérieur, un panneau central (2) qui est muni de deux rebords latéraux (16, 18) et d'un joint d'étanchéité (44, 40) sur tout son pourtour, et dont l'un (16) des rebords est emboîté dans les cavaliers (20) du premier panneau central tandis qu'il est maintenu incliné par le joint torique latéral (44), un second panneau latéral (3) muni de cavaliers de serrage (20) qui sont emboîtés sur le deuxième rebord (18) du panneau central (2) tandis que le joint latéral (44) de ce panneau central tend à les écarter, et une bride extérieure (5, 6, 7) formée à la périphérie de chacun des panneaux et comportant des alésages (8) de passage de boulons de fixation sur le pourtour de l'orifice à obturer qui provoquent la compression des joints toriques d'étanchéité et le redressement des panneaux (1, 2 et 3) en alignement les uns avec les autres.

**Patentansprüche**

1. Entfernbare Verschlußvorrichtung für eine Öffnung, die nur durch einen engen Zugang zugänglich ist, die wenigstens zwei Platten (1, 2, 3), die auf einem Bereich ihres Umfangs durch ein Flansch (5, 6, 7) zur Befestigung auf dem Umfang der abzudeckenden Öffnung versehen ist, der mit einer torischen Dichtungsverbindung (32, 40) versehen ist, und im anderen Bereich ihres Umfangs durch eine Montagerippe (12, 14, 16, 18) für eine benachbarte Platte begrenzt ist, und Einrichtungen zum Einklemmen der aneinanderliegenden Rippen der beiden benachbarten Platten aufweist, dadurch gekennzeichnet, daß die Einrichtungen zum Einklemmen Klemmen sind, wobei jede Klemme aus einer Klammer (20) gebildet ist, die auf der Rippe (12, 14) der einen der Platten befestigt ist und in den die Rippe (16, 18) der benachbarten Platte eingepaßt bzw. eingesteckt werden kann, und wenigstens eine der Platten (2) eine torische Dichtungsverbindung (44) auf ihrer seitlichen Andrückfläche auf die benachbarte Platte aufweist.

2. Verschlußvorrichtung nach Anspruch 1, dadurch gekennzeichnet, daß sie eine zentrale Platte (2) aufweist, die eine torische Dichtungsverbindung (44) an ihren beiden aneinander gegenüberliegenden seitlichen Andrückflächen auf die seitlichen Platten aufweist.

3. Verschlußvorrichtung nach Anspruch 1, dadurch gekennzeichnet, daß die Umfangsdichtungsverbindung (32) einer jeden der Platten an einem jeden seiner Enden durch einen Bereich von größerem Durchmesser (36, 40) abgeschlossen wird.

4. Verschlußvorrichtung nach Anspruch 1, dadurch gekennzeichnet, daß die torische Umfangsverbindung (32 - 40) einer jeden Platte eine Länge größer als jene des Halses (28, 30) aufweist, in dem sie angeordnet ist.

5. Verschlußvorrichtung nach einem der Ansprüche 2 bis 4, dadurch gekennzeichnet, daß die Umfangsverbindungen (32 - 40) und die seitlichen Verbindungen (44) der zentralen Platte aus einem einzigen Stück geformt sind.

6. Verschlußvorrichtung nach Anspruch 5, dadurch gekennzeichnet, daß die torischen Dichtungsverbindungen in Hälsen von Schwalbenschwanzquerschnitt angeordnet sind.

7. Verschlußvorrichtung nach Anspruch 1, dadurch gekennzeichnet, daß sie eine Seite aufweist, die mit Rippen (4) versehen ist, und daß die Hälse (28, 30) zur Aufnahme der torischen Dichtungsverbindung (32 - 40) in der Seite der Platten ausgebildet sind, die diesen Rippen gegenüberliegt.

8. Verschlußvorrichtung nach Anspruch 1, dadurch gekennzeichnet, daß sie aus einer ersten seitlichen Platte (1), die mit einem geradlinigen Rand (12) versehen ist, auf dem Klemmklammern (20) nach außen vorspringend angeordnet sind, aus einer zentralen Platte (2), die mit zwei seitlichen Leisten (16, 18) und einer Dichtungsverbindung (44, 40) an ihrem gesamten Umfang versehen ist, und von denen eine (16) der Leisten in den Klammern (20) der ersten Zentralplatte eingesteckt ist, während er durch die torische Seitenverbindung (44) geneigt gehalten wird, eine zweite seitliche Platte (3) mit Klemmklammern (20) versehen ist, die auf die zweite Leiste (18) der Zentralplatte (2) aufgesteckt sind, während die Seitenverbindungen (44) der Zentralplatte sie versucht voneinander wegzubringen, und ein äußerer Flansch (5, 6, 7), der am Umfang einer jeden Platte ausgebildet ist und für Durchsteckschrauben an dem Umfang der zu überdeckenden Öffnung Bohrungen (8) aufweist, die die Komprimierung der torischen Dichtungsverbindungen und die Ausrichtung der Platten (1, 2 und 3) in Fluchtung der einen mit den anderen bringt.

**Claims**

1. A removable shutter for an orifice which is only accessible of a narrow passage comprising at least two panels (1, 2, 3) bordered on one part of their periphery by a flange (5, 6, 7) for fixation to the perimeter of the orifice to be shut off, which is provided with an O-ring seal (32, 40) and on the other part of their periphery by a rib (12, 14, 16, 18) for assembly onto an adjacent panel, and means for clamping together the adjoined ribs of the two adjacent panels, characterized in that said clamping means are clips, each clip consisting of a rider (20) which is fastened onto the rib (12, 14) of one of the panels and into which the rib (16, 18) of the adjacent panel can be fitted and at least one of the panels (2) incorporates an O-ring seal (44) on its side surface bearing on an adjacent panel.

2. A shutter according to claim 1, characterized in that it incorporates a central panel (2) which incorporates an O-ring seal (44) on its two opposite side surfaces bearing on the side panels.

3. A shutter according to claim 1, characterized in that the peripheral leakproofing seal (32) of each of the panels terminates at each of its ends in a portion of greater diameter (36, 40).

4. A shutter according to claim 1, characterized in that the peripheral O-ring (32, 40) of each panel has a length greater than that of the groove (28, 30) in which it is located.

5. A shutter according to one of claims 2 to 4, characterized in that the peripheral (32 - 40) and lateral (44) seals of the central panel are moulded as a single part.

6. A shutter according to claim 5, characterized in that the O-ring seals are located in dovetail section grooves.

7. A shutter according to claim 1, characterized in that it incorporates a surface provided with ribs (4) and in that the grooves (28, 30) to take the O-ring seal (32 - 40) are provided in the surface of the panels opposite these ribs.

8. A shutter according to claim 1, characterized in that it is made up of a first side panel (1) equipped with a rectilinear flange (12) on the outside of which are mounted offset clamping riders (20), a central panel (2) which is equipped with two lateral flanges (16, 18) and a seal (44, 40) around all its perimeter, and one (16) of whose flanges is fitted into the riders (20) of the first central panel while it is maintained in an inclined position by the lateral O-ring (44), a second side panel (3) equipped with clamping riders (20) which are fitted onto the second flange (18) of the central panel (2) while the lateral seal (44) of this central panel tends to separate them, and an exterior flange (5, 6, 7) formed on the periphery of each of the panels and incorporating bores (8) to take the bolts for fastening onto the perimeter of the orifice to be shut off which cause the compression of the O-ring seals and the flattening out of the panels (1, 2 and 3) in alignment with each other.

EP 0 210 899 B1

FIG.1

FIG.2

FIG.4

FIG.3

FIG.5

FIG.6